(19) Europäisches Patentamt
European Patent Office
Office européen des brevets

(11) **EP 2 864 615 B1**

(12) **FASCICULE DE BREVET EUROPEEN**

(45) Date de publication et mention de la délivrance du brevet:
**06.06.2018 Bulletin 2018/23**

(21) Numéro de dépôt: **13737335.3**

(22) Date de dépôt: **20.06.2013**

(51) Int Cl.:
***F02C 9/26*** *(2006.01)*

(86) Numéro de dépôt international:
**PCT/FR2013/051435**

(87) Numéro de publication internationale:
**WO 2013/190237 (27.12.2013 Gazette 2013/52)**

(54) **PROCÉDÉ ET DISPOSITIF D'AJUSTEMENT D'UNE VALEUR SEUIL DE DÉBIT CARBURANT**

VERFAHREN UND VORRICHTUNG ZUR EINSTELLUNG EINES GRENZWERTES EINER BRENNSTOFFFLUSSRATE

METHOD AND DEVICE FOR ADJUSTING A THRESHOLD VALUE OF A FUEL FLOW RATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2012 FR 1255852**

(43) Date de publication de la demande:
**29.04.2015 Bulletin 2015/18**

(73) Titulaire: **SNECMA**
**75015 Paris (FR)**

(72) Inventeurs:
• **JAVELOT, Christophe**
**F-77550 Moissy-Cramayel Cedex (FR)**
• **DJELASSI, Cédrik**
**F-77550 Moissy-Cramayel Cedex (FR)**
• **GAULLY, Bruno, Robert**
**F-77550 Moissy-Cramayel Cedex (FR)**
• **SYLLA, Ismail**
**F-77550 Moissy-Cramayel Cedex (FR)**

(74) Mandataire: **Fontenelle, Sandrine et al**
**Cabinet Beau de Loménie**
**158, rue de l'Université**
**75340 Paris Cedex 07 (FR)**

(56) Documents cités:
**EP-A2- 1 067 282      EP-A2- 1 510 795**
**WO-A1-2011/128573      FR-A1- 2 966 518**
**US-A1- 2004 117 102**

**Description**

Arrière-plan de l'invention

La présente invention se rapporte au domaine général des turbomachines et s'applique de façon privilégiée au domaine de l'aéronautique.

L'invention concerne plus particulièrement la régulation en débit de carburant d'une turbomachine équipant un aéronef, comme par exemple un turboréacteur, lors d'une phase transitoire de l'aéronef telle une phase d'accélération ou de décélération.

De façon connue, la régulation en débit de carburant d'un turboréacteur vise à s'assurer que le débit massique de carburant injecté dans la chambre de combustion du turboréacteur, en phase d'accélération ou de décélération, ne dépasse pas une certaine valeur limite au-delà de laquelle un dysfonctionnement du turboréacteur peut être rencontré. Un tel dysfonctionnement est par exemple un pompage d'un compresseur du turboréacteur en phase d'accélération ou une extinction du turboréacteur en phase de décélération.

Cette régulation s'appuie aujourd'hui sur une estimation du débit massique de carburant injecté dans la chambre de combustion, établie à partir de la position du dispositif de dosage de carburant du turboréacteur, aussi connu sous le nom de doseur carburant.

Plus précisément, le doseur carburant est muni d'un tiroir, aussi appelé vanne de dosage (FMV pour Fuel Metering Valve), dont la position est proportionnelle au débit de carburant volumique devant être injecté dans la chambre de combustion, lorsque la différence de pression de part et d'autre du tiroir est maintenue constante.

En se déplaçant, le tiroir obstrue plus ou moins une section S de passage du carburant dans le doseur carburant. La section S, aussi appelée surface d'ouverture du doseur carburant, s'exprime aisément en fonction de la position du tiroir. Elle est proportionnelle au débit volumique de carburant injecté dans la chambre de combustion.

La section S est contrôlée, via une boucle d'asservissement, par le module de régulation électronique ou ECU (Engine Control Unit) du dispositif de régulation pleine autorité de l'aéronef (ou FADEC pour « Full Authority Digital Engine Control »). L'ECU établit la demande carburant en débit massique sous la forme d'un signal de consigne transmis au doseur carburant via la boucle d'asservissement, cette demande carburant en débit massique étant ensuite transformée en débit volumique.

Le débit massique de carburant injecté dans la chambre de combustion peut donc être estimé à partir de la mesure de la position du doseur carburant et d'une loi associée, connue de l'homme du métier. Cette loi dépend de la densité volumique du carburant utilisé par l'aéronef.

La densité volumique du carburant est généralement supposée constante durant la mission de l'aéronef. Elle est prédéterminée en fonction de conditions de référence, c'est-à-dire, pour un carburant de référence et à une température de référence.

Cependant, cette hypothèse ne tient pas compte d'un changement possible de la nature du carburant utilisé par rapport au carburant de référence, ni d'une variation possible de la température du carburant par rapport à la température de référence lors du fonctionnement du turboréacteur.

Elle ne tient pas non plus compte de l'existence, pour un même carburant, d'une possible dispersion de la densité volumique autour de la valeur de référence utilisée dans la loi.

Par ailleurs, cette hypothèse souffre de diverses incertitudes liées notamment à l'interchangeabilité des équipements électroniques de traitement des mesures de position du doseur ainsi qu'à la précision des équipements.

Par conséquent, l'utilisation d'une telle loi induit des imprécisions dans l'estimation du débit massique de carburant injecté dans la chambre de combustion, utilisée durant la régulation du turboréacteur.

Or, si le débit massique de carburant injecté dans la chambre de combustion est sous-estimé par le doseur carburant, cela signifie que la marge d'accélération dont va bénéficier le turboréacteur en phase transitoire d'accélération va au contraire être surestimée (i.e. on va accorder au turboréacteur une marge d'accélération supérieure à celle qu'on lui accorderait si le débit massique de carburant était correctement estimé). Il existe donc un risque d'accélération non souhaitée du turboréacteur, voire de pompage du compresseur en accélération.

Inversement, la marge de décélération du turboréacteur en phase de décélération va être sous-estimée (i.e. on va accorder au turboréacteur une marge de décélération inférieure à celle qu'on lui accorderait si le débit massique de carburant était correctement estimé). Il existe donc un risque de ne pas pouvoir décélérer correctement.

Au contraire, si le débit massique de carburant injecté dans la chambre de combustion est surestimé par le doseur carburant, cela signifie que la marge de décélération dont va bénéficier le turboréacteur en phase transitoire de décélération va être surestimée (i.e. on va accorder au turboréacteur une marge de décélération supérieure à celle qu'on lui accorderait si le débit massique de carburant était correctement estimé). Il existe donc un risque de dévissage ou d'extinction du turboréacteur.

Inversement, la marge d'accélération du turboréacteur en phase d'accélération va être sous-estimée (i.e. on va accorder au turboréacteur une marge d'accélération inférieure à celle qu'on lui accorderait si le débit massique de carburant était correctement estimé). Il existe donc un risque de ne pas pouvoir accélérer correctement.

Le manque de précision des estimations fournies par le dispositif de dosage a ainsi un impact non négligeable sur la régulation du turboréacteur et les performances atteintes par celui-ci.

Il existe donc un besoin d'une régulation du turboréacteur qui ne présente pas de tels inconvénients.

Objet et résumé de l'invention

La présente invention répond notamment à ce besoin en proposant un procédé d'ajustement d'une valeur seuil de débit carburant destinée à être utilisée dans une boucle ouverte de régulation d'une turbomachine propulsant un aéronef, ce procédé comportant :

- une étape d'obtention d'une première estimation d'un débit de carburant injecté dans une chambre de combustion de la turbomachine, fournie par un dispositif de dosage de carburant de la turbomachine ;
- une étape d'obtention d'une seconde estimation du débit de carburant injecté dans la chambre de combustion, cette seconde estimation étant plus précise que la première estimation sur au moins un intervalle de valeurs du débit de carburant et fournie par un dispositif d'estimation équipé d'un débitmètre ; et
- une étape d'ajustement de la valeur seuil de débit carburant à l'aide d'une différence évaluée entre la première estimation et la seconde estimation.

Corrélativement, l'invention vise aussi un dispositif d'ajustement d'une valeur seuil de débit carburant destinée à être utilisée dans une boucle ouverte de régulation d'une turbomachine propulsant un aéronef, ce dispositif comportant :

- des moyens d'obtention d'une première estimation d'un débit de carburant injecté dans une chambre de combustion de la turbomachine, fournie par un dispositif de dosage de carburant de la turbomachine ;
- des moyens d'obtention d'une seconde estimation du débit de carburant injecté dans la chambre de combustion, plus précise sur au moins un intervalle de valeurs du débit de carburant que la première estimation et fournie par un dispositif d'estimation équipé d'un débitmètre ; et
- des moyens d'ajustement de la valeur seuil de débit carburant à l'aide d'une différence évaluée entre la première estimation et la seconde estimation.

Au sens de l'invention, une valeur seuil de débit carburant définit un débit de carburant maximum ou minimum, pouvant être injecté à un instant donné dans la chambre de combustion de la turbomachine.

Cette valeur seuil est particulièrement importante lors de la régulation du moteur, notamment en phase d'accélération ou de décélération, puisqu'elle est comparée dans une boucle ouverte, à l'estimation du débit de carburant injecté dans la chambre de combustion de la turbomachine, afin de réguler l'apport en carburant et d'estimer la marge d'accélération ou de décélération disponible pour la turbomachine. Cette valeur seuil est aussi connue sous le nom de butée d'accélération, respectivement de décélération.

Les butées d'accélération et de décélération conditionnent donc les performances de la turbomachine. Elles sont classiquement fixées, par le secteur en charge de l'opérabilité de la turbomachine, de sorte à préserver la turbomachine d'un dysfonctionnement tel un pompage en accélération (qui se traduit par une diminution de la puissance en accélération) ou une extinction du turboréacteur en décélération. Les butées d'accélération et de décélération sont notamment déterminées, de façon connue en soi, au regard de la ligne de pompage du compresseur de la turbomachine, en intégrant les usures des pièces de la turbomachine, les imprécisions des équipements de mesure, les dispersions par rapport aux valeurs de référence pouvant être rencontrées entre diverses turbomachines, etc.

L'invention propose avantageusement d'ajuster ces valeurs seuil ou butées en tenant compte de la précision (ou plus précisément du manque de précision) de l'estimation de débit de carburant fournie par le dispositif de dosage pour certaines débits. Préférentiellement, on s'assurera que l'ajustement de la valeur seuil avec la différence évaluée entre la première estimation et la seconde estimation n'est réalisé que lorsque le débit de carburant injecté dans la chambre de combustion a une valeur comprise dans l'intervalle de valeurs pour lequel la seconde estimation est plus précise que la première estimation.

Par estimation d'un débit de carburant fournie par le dispositif de dosage de carburant de la turbomachine, on entend au sens de l'invention, soit une estimation fournie directement par le dispositif de dosage de carburant, soit, par abus de langage, une estimation déduite de son état, c'est-à-dire, pour un dispositif de dosage comportant une vanne de dosage FMV tel que décrit précédemment, une estimation déduite de la position de la vanne à l'aide d'une loi appropriée connue de l'homme du métier.

Plus précisément, l'invention propose d'intégrer dans la valeur de seuil utilisée pour la régulation de la turbomachine (i.e. dans la butée d'accélération et/ou dans la butée de décélération), la différence entre l'estimation de débit de carburant fournie par le dispositif de dosage et une estimation plus précise fournie par un dispositif d'estimation utilisant un débitmètre. Un tel dispositif d'estimation est par exemple décrit dans le document FR 2 958 976 ou dans le document EP 1 510 795. Il est, de façon connue, plus précis que le dispositif de dosage pour au moins un intervalle de valeurs du débit de carburant injecté dans la chambre de combustion de la turbomachine.

L'intégration de cette différence dans les butées d'accélération et/ou de décélération permet de ne pas sur-contraindre ou au contraire de ne pas sous-contraindre la turbomachine en phase d'accélération ou de décélération. Il en résulte un gain dans les marges d'accélération et de décélération disponibles. Ceci conduit, en fonction de la manière dont l'ajustement est réalisé, à :

- un gain en matière de temps requis pour l'accélération et la décélération. Les performances de la turbomachine sont ainsi améliorées ; et/ou
- une protection contre le pompage et le dévissage ou l'extinction de la turbomachine.

Par ailleurs, l'estimation fournie par le dispositif d'estimation, bien qu'étant plus précise que l'estimation de débit carburant fournie par le dispositif de dosage sur au moins une plage de valeurs du débit de carburant, est aussi souvent plus vulnérable aux défaillances. Le fait d'utiliser cette estimation uniquement en boucle ouverte comme proposée dans l'invention, plutôt que de l'utiliser en continu en remplacement de l'estimation fournie par le dispositif de dosage, permet de limiter l'impact d'une telle défaillance sur le fonctionnement de la turbomachine. Notamment, l'invention n'introduit pas de risque supplémentaire de défaillance sur les autres boucles de régulation de la turbomachine.

Dans un mode particulier de réalisation, l'étape d'ajustement comprend l'ajout, à la valeur seuil de débit carburant, de la différence évaluée entre la première estimation et la seconde estimation, pondérée par un facteur de pondération prédéterminé, ce facteur de pondération étant une valeur positive choisie inférieure ou égale à 1.

Le facteur de pondération permet avantageusement de contrôler la correction appliquée à la valeur seuil de débit de carburant, par exemple en fonction de la fiabilité des estimations utilisées. Il peut être déterminé par exemple par des essais afin d'optimiser les performances de la turbomachine.

Dans un mode particulier de réalisation de l'invention, le procédé d'ajustement comprend une étape de comparaison de la différence évaluée entre la première estimation et la seconde estimation, pondérée par le facteur de pondération prédéterminé, par rapport à une différence de précisions attendue entre la première estimation et la seconde estimation.

Par différence de précisions attendue entre la première estimation et la seconde estimation, on entend ici, la différence entre les précisions du dispositif de dosage et du dispositif d'estimation, fournies usuellement par les fabricants de ces dispositifs.

L'ajustement de la valeur seuil peut dépendre du résultat de cette étape de comparaison. Ainsi, on peut par exemple adopter le mécanisme d'ajustement suivant :

- on ajuste la valeur seuil à l'aide de la différence évaluée entre la première estimation et la seconde estimation si la différence évaluée entre la première et la seconde estimation, pondérée par le facteur de pondération prédéterminé, est inférieure à la différence de précisions attendue entre la première estimation et la seconde estimation ; et
- on ajuste la valeur seuil à l'aide de la différence de précisions attendue entre la première estimation et la seconde estimation sinon.

On s'assure de cette sorte que l'on n'ajuste pas de façon erronée la valeur de seuil, notamment lorsque le dispositif d'estimation équipé du débitmètre présente une défaillance ou fournit une estimation moins fiable que le doseur carburant.

Dans un autre mode de réalisation de l'invention, le procédé d'ajustement comprend une étape de comparaison de la différence évaluée entre la première estimation et la seconde estimation avec un seuil défini à partir d'une précision attendue de la première estimation.

Une telle étape de comparaison permet de s'assurer notamment que la différence relative entre la première estimation et la seconde estimation est inférieure à l'imprécision maximale du dispositif de dosage, et de ne réaliser l'ajustement de la valeur seuil que le cas échéant. On évite ainsi un ajustement de la valeur seuil par une valeur aberrante, qui ne conduirait pas à l'amélioration de la précision de l'estimation fournie par le dispositif de dosage.

En d'autres mots, les étapes de comparaison précitées permettent de s'assurer que l'ajustement de la valeur seuil à l'aide de la différence entre le première estimation et la seconde estimation est réalisé dans une plage de valeurs du débit de carburant dans laquelle, de façon fiable, la seconde estimation fournie par le dispositif d'estimation est plus précise que la première estimation fournie par le dispositif de dosage.

Comme mentionné précédemment, l'invention permet avantageusement d'ajuster, autrement dit de corriger, une valeur seuil de débit carburant destinée à être utilisée lors d'une phase d'accélération de l'aéronef (i.e. une butée d'accélération) et/ou une valeur seuil de débit carburant destinée à être utilisée lors d'une phase de décélération de l'aéronef (i.e. une butée de décélération), en tenant compte de la précision de l'estimation de débit de carburant fournie par le dispositif de dosage.

Différentes stratégies d'ajustement peuvent être retenues en fonction de l'objectif que l'on cherche à atteindre pour la régulation de la turbomachine.

Ainsi, selon un mode de réalisation, lorsque la valeur seuil de débit carburant considérée est destinée à être utilisée lors d'une phase d'accélération de l'aéronef, cette valeur seuil est ajustée au cours de l'étape d'ajustement à l'aide de la différence évaluée entre la première estimation et la deuxième estimation si cette différence est positive, la valeur seuil restant inchangée sinon.

De façon similaire, lorsque la valeur seuil de débit carburant considérée est destinée à être utilisée lors d'une phase décélération de l'aéronef, cette valeur seuil est ajustée au cours de l'étape d'ajustement à l'aide de la différence évaluée entre la première estimation et la deuxième estimation si cette différence est négative, la valeur seuil restant inchangée sinon.

Ainsi, dans ce mode de réalisation, à chaque étape d'ajustement, on ajuste uniquement l'une ou l'autre des butées d'accélération ou de décélération, en fonction du signe de la différence entre la première et la seconde estimation. Il s'agit par ce choix d'implémentation d'améliorer les performances de la turbomachine en termes de marge d'accélération ou de décélération, afin de ne pas sur-contraindre l'apport à carburant lors des phases d'accélération ou de décélération.

Par ailleurs, de façon avantageuse, dans ce mode de réalisation, on conserve les marges de précision fixées par le secteur en charge de l'opérabilité de la turbomachine pour l'estimation du débit carburant utilisée dans la régulation de la turbomachine.

Dans un autre mode de réalisation :

- lorsque la valeur seuil de débit carburant considérée est destinée à être utilisée lors d'une phase d'accélération de l'aéronef, cette valeur seuil est ajustée au cours de l'étape d'ajustement à l'aide de la différence évaluée entre la première estimation et la deuxième estimation si cette différence est négative, la valeur seuil restant inchangée sinon ; et

- lorsque la valeur seuil de débit carburant considérée est destinée à être utilisée lors d'une phase décélération de l'aéronef, cette valeur seuil est ajustée au cours de l'étape d'ajustement à l'aide de la différence évaluée entre la première estimation et la deuxième estimation si cette différence est positive, la valeur seuil restant inchangée sinon.

Ce mode de réalisation permet de protéger la turbomachine contre un risque de pompage et d'extinction ou de dévissage.

Dans un autre mode de réalisation encore, on ajuste les butées d'accélération et de décélération à l'aide de la différence entre la première et la seconde estimation, que cette différence soit positive ou négative.

Ceci permet non seulement d'améliorer les performances de la turbomachine, mais également de s'assurer que les marges d'accélération et de décélération permises ne sont pas surestimées avec pour risque un pompage d'un compresseur de la turbomachine ou une extinction de celle-ci.

Selon un autre aspect, l'invention vise aussi l'utilisation d'une valeur seuil de débit carburant dans une boucle ouverte de régulation d'une turbomachine équipant un aéronef lors d'une phase transitoire de l'aéronef, cette valeur seuil étant ajustée à l'aide d'un procédé d'ajustement selon l'invention.

Selon un autre aspect encore, l'invention vise aussi une turbomachine propulsant un aéronef et comportant :

- un dispositif de dosage de carburant apte à fournir une estimation d'un débit de carburant injecté dans une chambre de combustion de la turbomachine ;

- un dispositif d'estimation du débit de carburant injecté équipé d'un débitmètre, ledit dispositif d'estimation étant apte à fournir une estimation plus précise que le dispositif de dosage du débit de carburant injecté dans la chambre de combustion de la turbomachine sur au moins un intervalle de valeurs du débit de carburant ; et

- un dispositif d'ajustement d'une valeur seuil de débit carburant selon l'invention, apte à utiliser des estimations fournies par le dispositif de dosage et le dispositif d'estimation.

Le procédé d'utilisation et la turbomachine selon l'invention disposent des mêmes avantages que le procédé et le dispositif d'ajustement cités précédemment.

Dans un mode particulier de réalisation, les différentes étapes du procédé d'ajustement sont déterminées par des instructions de programme d'ordinateur.

En conséquence, l'invention vise aussi un programme d'ordinateur sur un support d'informations, ce programme étant susceptible d'être mis en oeuvre dans un dispositif d'ajustement, dans une turbomachine ou plus généralement dans un ordinateur, ce programme comportant des instructions adaptées à la mise en oeuvre des étapes d'un procédé d'ajustement tel que décrit ci-dessus.

Ce programme peut utiliser n'importe quel langage de programmation, et être sous la forme d'un code source, d'un code objet, ou d'un code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut par ailleurs envisager, dans d'autres modes de réalisation, que le procédé d'ajustement, l'utilisation de ce procédé, le dispositif d'ajustement et la turbomachine selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente de façon schématique une turbomachine conforme à l'invention, dans un mode particulier de réalisation ;
- la figure 2 représente un dispositif d'estimation d'un débit de carburant injecté dans une chambre de combustion de la turbomachine de l'état de la technique, apte à fournir une estimation plus précise qu'un doseur de carburant sur au moins un intervalle de valeurs du débit de carburant ;
- la figure 3 illustre les principales étapes d'un procédé d'ajustement conforme à l'invention, dans un mode particulier de réalisation ;
- les figures 4 et 5 illustrent respectivement l'ajustement d'une butée d'accélération et d'une butée de décélération conformément à une variante préférentielle du mode de réalisation de l'invention représenté sur la figure 3 ;
- les figures 6 et 7 illustrent sous forme de courbes, des exemples de valeurs seuil ajustées conformément à l'invention, et le gain en résultant en marge d'accélération ou de décélération.

### Description détaillée de l'invention

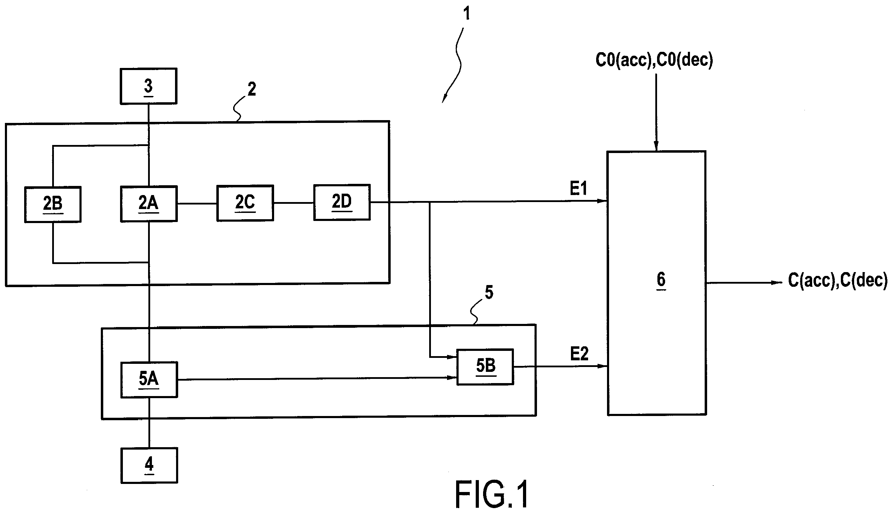

La **figure 1** représente de façon schématique, une turbomachine 1 conforme à l'invention, dans un mode particulier de réalisation.

Dans ce mode de réalisation, la turbomachine 1 est un turboréacteur propulsant un avion. Toutefois l'invention s'applique à d'autres turbomachines telles que par exemple à un turbopropulseur, ainsi qu'à d'autres types d'aéronefs.

Conformément à l'invention, le turboréacteur 1 comprend un dispositif de dosage de carburant 2, aussi communément appelé doseur carburant, apte à régler la quantité de carburant venant du circuit carburant 3 de l'avion et fournie par le système 4 d'injection de carburant de la chambre de combustion du turboréacteur.

Comme décrit précédemment, le doseur carburant 2 est muni d'un tiroir 2A (ou vanne de dosage FMV), dont la position varie en fonction du débit de carburant devant être injecté dans la chambre de combustion.

En se déplaçant, le tiroir vient obstruer une section de passage du carburant, notée S, aussi appelée surface d'ouverture du dispositif de dosage. On notera que la relation entre la surface S et la position du tiroir est connue en soi et ne sera pas détaillée davantage ici.

La surface S est proportionnelle au débit volumique Qv de carburant injecté dans la chambre de combustion, i.e. :

$$Qv = KS\sqrt{\Delta P}$$

où K désigne une constante et $\Delta P$ la différence de pression dans le doseur 2 existant de part et d'autre du tiroir 2A. Cette différence de pression est maintenue constante grâce à une soupape régulatrice 2B, connue en soi.

Le débit volumique Qv est obtenu en divisant un débit massique Qm par la densité volumique p du carburant circulant dans le dispositif de dosage. La densité volumique p est supposée ici constante. Elle est prédéterminée pour un carburant de référence et une température de référence.

Le débit massique Qm est transmis au doseur 2 par le module de régulation électronique ECU du FADEC de l'avion, sous la forme d'un signal de consigne, via une boucle d'asservissement (non représentée).

Dans l'exemple envisagé ici, le doseur carburant 2 est muni en outre d'un capteur de position 2C, apte à mesurer la position du tiroir 2A, à divers instants t=nTe, où n désigne un entier positif et Te la période d'échantillonnage des équipements électroniques du turboréacteur 1. Le capteur de position 2C est par exemple un capteur LVDT (Linear Variable Differential Transformer), connu de l'homme du métier.

La mesure délivrée par le capteur de position 2C à l'instant t est transformée par un convertisseur 2D, également connu, en une estimation E1(t) du débit massique de carburant injecté dans la chambre de combustion du turboréacteur 1. L'estimation E1 est une estimation fournie par le dispositif de dosage au sens de l'invention.

Conformément à l'invention, le turboréacteur 1 comprend également un second dispositif 5 d'estimation du débit de carburant injecté dans la chambre de combustion, apte à fournir une estimation du débit de carburant injecté plus précise que l'estimation E1 fournie par le doseur 2 sur au moins un intervalle de valeurs du débit de carburant.

Dans le mode de réalisation décrit ici, ce second dispositif 5 incorpore un débitmètre massique 5A ou WFM (Weight Flow Meter) tel un couple-mètre ou un débitmètre volumique, ainsi qu'un dispositif dit d'hybridation 5B.

Le dispositif d'hybridation 5B est apte à fournir une seconde estimation E2(t) du débit de carburant injecté à l'instant t dans la chambre de combustion du turboréacteur 1 à partir de l'estimation E1(t) et d'une mesure de débit réalisée par le débitmètre massique 5A. La combinaison de l'estimation E1(t) et de la mesure réalisée par le débitmètre massique permet avantageusement d'améliorer la précision du dosage et de connaître plus précisément le débit de carburant injecté dans la chambre de combustion du turboréacteur 1, sur au moins une plage de valeurs du débit de carburant (e.g. valeurs supérieures à un seuil prédéterminé en fonction notamment de la précision du débitmètre).

Le dispositif d'hybridation 5B est, dans le mode de réalisation envisagé ici, un dispositif d'élaboration d'un signal de consigne identique à celui décrit dans le document FR 2 958 976 : la seconde estimation E2(t) utilisée conformément à l'invention correspond au signal de consigne élaboré selon le mécanisme décrit dans le document FR 2 958 976, à partir du signal délivré par le débitmètre 5A et du signal évalué à partir de la mesure de la position du tiroir 2A du doseur 2 (signal qui correspond ici à l'estimation E1(t) fournie par le doseur 2). Ce signal de consigne offre avantageusement une meilleure estimation du débit de carburant effectivement injecté dans la chambre de combustion du turboréacteur 1, pour une large plage de valeurs du débit de carburant. Il permet de tirer profit à la fois de la précision d'estimation du débit de carburant en valeur absolue du débitmètre 5A et de la précision d'estimation en valeur relative (i.e. dynamique) du doseur 2.

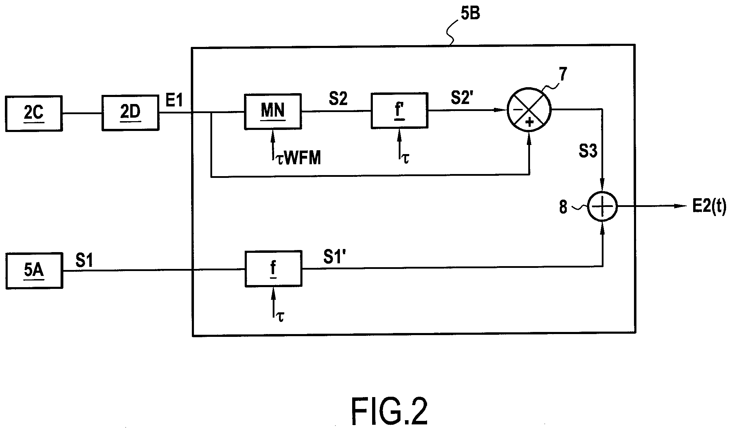

La **figure 2** rappelle brièvement le fonctionnement du dispositif d'hybridation 5B, dans une variante simplifiée de réalisation.

Comme mentionné précédemment, pour fournir l'estimation de débit de carburant E2(t), le dispositif 5B utilise d'une part, un signal de mesure S1(t) du débit de carburant injecté dans la chambre de combustion, délivré par le débitmètre 5A, et d'autre part, l'estimation E1(t) délivrée par le convertisseur 2D du doseur 2 à partir de la position du tiroir 2A mesurée par le capteur de position 2C.

Le signal S1(t) délivré par le débitmètre 5A a classiquement une forme en créneaux. Pour permettre son exploitation, il est filtré par un filtre numérique passe-bas f adapté à supprimer les créneaux (autrement dit à lisser le signal S1). La constante de temps $\tau$ du filtre f est choisie à cette fin suffisamment élevée. Elle est déterminée de façon expérimentale : on choisira ainsi la plus petite constante de temps permettant d'obtenir un signal lissé après filtrage (préférentiellement inférieure à 1000s).

On note S1'(t) le signal obtenu en sortie du filtre f.

En parallèle du traitement appliqué au signal S1(t), le signal E1(t) est fourni en entrée d'un module de modélisation numérique MN. Le module MN est adapté à modéliser le débit de carburant théoriquement mesuré par le débitmètre 5A lorsqu'un débit de carburant caractérisé par le signal E1 le traverse. On note S2 le signal modélisé par le module MN et représentatif du débit de carburant mesuré par le débitmètre 5A.

Le module MN s'appuie sur un modèle numérique des éléments mécaniques du débitmètre 5A et prend en compte notamment sa constante de temps $\tau$WFM. La constante de temps $\tau$WFM est supposée ici constante, égale à la constante de temps fournie par le fabricant du débitmètre. On notera qu'un tel modèle numérique est connu en soi et ne sera pas décrit plus en détails ici.

Le module MN modélisant le débitmètre 5A, il s'ensuit que le signal modélisé S2 est aussi, de façon similaire au signal S1, un signal en créneaux.

Il est donc fourni à un filtre numérique passe-bas f', similaire au filtre numérique f (et notamment de même constante de temps $\tau$) afin d'être lissé. Dans l'exemple décrit ici, les filtres f et f' sont identiques.

Le signal S2'(t) lissé obtenu en sortie du filtre f' est alors fourni à un élément soustracteur 7, adapté à soustraire le signal S2'(t) au signal E1(t).

Le signal S3(t) résultant de cette soustraction est alors ajouté, à l'aide d'un élément additionneur 8, au signal S1'(t) issu du filtre f pour former l'estimation de débit de carburant E2(t).

On note que d'autres variantes de réalisation plus élaborées, décrites dans le document FR 2 958 976, peuvent être considérées pour fournir l'estimation E2 à partir du signal issu du débitmètre 5A et de l'estimation E1(t).

L'estimation E2(t) fournie par le dispositif d'hybridation 5B est ainsi plus précise que l'estimation E1(t) fournie par le doseur 2, pour une large plage de valeurs du débit de carburant. On note $\delta1$ la précision des estimations fournies par le doseur 2 et $\delta2$ la précision des estimations fournies par le dispositif 5B.

Les précisions $\delta1$ et $\delta2$ peuvent être déterminées à partir d'informations, telles que des abaques, divulguées par les fabricants respectivement du doseur 2 et du dispositif 5B. Ces précisions peuvent dépendre notamment, de façon connue en soi, du régime N2 du turboréacteur 1 pour la précision $\delta1$ et du débit de carburant considéré pour la précision $\delta2$.

En variante, d'autres dispositifs d'estimation du débit de carburant injecté dans la chambre de combustion, apte à fournir une estimation E2(t) plus précise que l'estimation fournie par le doseur carburant 2 sur au moins un intervalle de valeurs du débit de carburant peuvent être utilisés, comme par exemple le dispositif de détermination d'une mesure de débit massique décrit dans le document EP 1 510 795.

Conformément à l'invention, le turboréacteur 1 comprend également un dispositif 6 d'ajustement d'une valeur seuil C0 de débit carburant conforme à l'invention, apte à utiliser les estimations E1(t) et E2(t) fournies respectivement par le doseur 2 et le dispositif d'estimation 5 pour élaborer une valeur seuil ajustée C.

Dans le mode de réalisation décrit ici, le dispositif 6 d'ajustement est un module numérique intégré au module de régulation ECU du FADEC de l'avion. Plus précisément, le dispositif d'ajustement 6 comprend un programme d'ordinateur conforme à l'invention comportant des instructions adaptées à la mise en oeuvre des étapes d'un procédé d'ajustement selon l'invention, stocké dans une mémoire morte de l'ECU du FADEC.

Les estimations E1(t) et E2(t) sont transmises au dispositif 6 d'ajustement via des moyens de communication entre les équipements du turboréacteur 1 et le FADEC connus en soi.

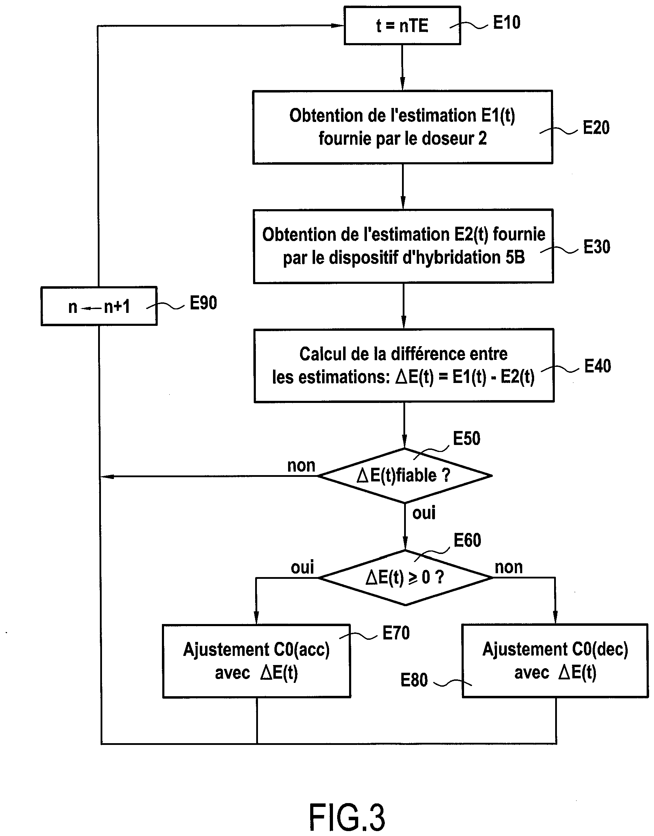

Nous allons maintenant décrire en référence à la **figure 3,** les principales étapes d'un procédé d'ajustement conforme à l'invention, mis en oeuvre par le dispositif 6 d'ajustement pour ajuster une valeur seuil C0 de débit carburant, dans un mode particulier de réalisation de l'invention.

La valeur seuil ajustée conformément à l'invention est ici, soit une butée d'accélération notée C0(acc), destinée à être utilisée pour la régulation du turboréacteur lors d'une phase d'accélération de l'avion, soit une butée de décélération notée C0(dec), destinée à être utilisée pour la régulation du turboréacteur lors d'une phase de décélération de l'avion.

Dans l'exemple envisagé ici, les butées d'accélération C0(acc) et de décélération C0(dec) sont déterminées à partir de limites portant sur le ratio CO/P du débit de carburant injecté dans la chambre de combustion sur la pression statique P mesurée en sortie de la chambre de combustion. Ces limites sont fixées, de façon connue en soi par le secteur en charge de l'opérabilité du turboréacteur, pour se préserver d'un pompage en accélération et d'une extinction du turboréacteur 1 en décélération, et en intégrant l'usure des équipements du turboréacteur 1, les imprécisions des équipements de mesure, les dispersions entre les différents turboréacteurs, etc. Elles dépendent notamment du régime du compresseur haute pression du turboréacteur 1, ainsi que de la pression totale en entrée de la soufflante du turboréacteur 1.

Dans le mode de réalisation décrit ici, l'ajustement est réalisé à différents instants t=nTe (étape E10), où n désigne un entier positif, et Te la période d'échantillonnage du dispositif d'ajustement 6 (qui est supposée ici identique à la période d'échantillonnage du doseur 2 et du dispositif 5), de sorte à optimiser la précision des butées d'accélération et de décélération.

En variante, cet ajustement peut être réalisé à des instants prédéterminés, par exemple en début de phase d'accélération et/ou en début de phase de décélération, ou périodiquement à des instants multiples de la période d'échantillonnage, afin de limiter les opérations d'ajustement réalisées. Le choix de la fréquence d'ajustement résulte d'un compromis entre complexité et performance de la régulation du turboréacteur.

Conformément à l'invention, le dispositif d'ajustement 6 obtient une première estimation E1(t) du débit de carburant injecté dans la chambre de combustion du turboréacteur 1, à l'instant t (étape E20). Cette première estimation est fournie par le convertisseur 2D du doseur 2 à partir de la mesure de la position du tiroir 2A du doseur 2 par le capteur de position 2C, comme décrit précédemment.

Cette première estimation E1(t) est fournie au dispositif d'hybridation 5B. Le dispositif d'hybridation 5B combine l'estimation E1(t) à une mesure du débit de carburant réalisée par le débitmètre 5A à l'instant t, comme rappelé précédemment en référence à la figure 2, et dérive de cette combinaison, une seconde estimation E2(t) du débit de carburant injecté dans la chambre de combustion du turboréacteur 1 (étape E30).

Le dispositif d'ajustement 6 évalue alors la différence ΔE(t) entre les estimations E1(t) et E2(t) ainsi obtenues (étape E40). Plus précisément ici :

$$\Delta E(t) = E1(t) - E2(t)$$

Dans le mode de réalisation décrit ici, avant d'ajuster la butée d'accélération ou de décélération à l'aide de la différence ΔE(t), le dispositif d'ajustement 6 vérifie la fiabilité de cette différence ΔE(t) par rapport à la précision δ1 du doseur 2 (étape E50).

A cette fin, il compare la différence ΔE(t) par rapport à un seuil défini à partir de la précision δ1 du doseur 2, ou plus précisément ici, de façon équivalente, à partir du taux d'imprécision p1 du doseur 1.

Ainsi, au cours de cette comparaison, le dispositif d'ajustement 6 vérifie si :

$$\frac{|\Delta E(t)|}{E1(t)} \times 100 < p1$$

où p1 est exprimé en pourcentage et désigne le taux d'imprécision de l'estimation E1(t) fournie par le dispositif de dosage 2 (on notera que si δ1 est également exprimé en pourcentage, p1 et δ1 sont liés par l'équation p1=100-δ1). Le taux p1 peut être déterminé, de façon connue de l'homme du métier, en fonction du régime du turboréacteur 1 et des spécifications fournies par le fabricant du dispositif de dosage 2.

Le dispositif d'ajustement 6 s'assure ainsi que la correction apportée à la valeur seuil ne dépasse pas l'imprécision p1 maximum du doseur 2. En d'autres mots, cette comparaison permet au dispositif d'ajustement 6 de vérifier que la précision de l'estimation E2(t) est bien supérieure pour le débit considéré à la précision de l'estimation E1(t).

Si le dispositif d'ajustement 6 détermine que la différence ΔE(t) n'est pas fiable (autrement dit ne vérifie pas l'inégalité ci-dessus), il n'ajuste pas les butées d'accélération et de décélération.

Il convient de noter que d'autres tests peuvent être mis en oeuvre pour détecter que l'ajustement de la butée d'accélération à l'aide de la différence ΔE(t) est opportun. Ainsi, par exemple, on peut comparer l'estimation E1(t) ou E2(t) à l'intervalle de valeurs dans lequel l'estimation E2(t) est connue être plus précise que l'estimation E1(t), et désactiver l'ajustement des butées d'accélération et de décélération si le débit de carburant estimé par E1(t) ou E2(t) ne se trouve pas dans cet intervalle.

Si le dispositif d'ajustement 6 détermine que la

différence ∆E(t) est fiable, il détermine alors le signe de la différence ∆E(t) (étape E60).

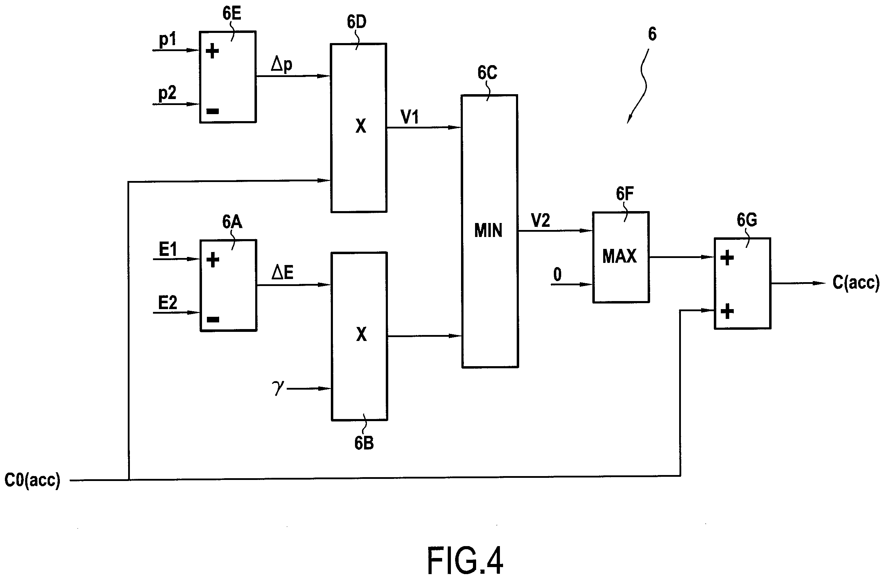

Dans le mode de réalisation décrit ici, s'il détermine que la différence ∆E(t) est positive ou nulle (réponse oui au test de l'étape E60), le dispositif d'ajustement 6 ajuste la butée d'accélération C0(acc) à partir de cette différence (étape E70), comme décrit ultérieurement en référence à la figure 4.

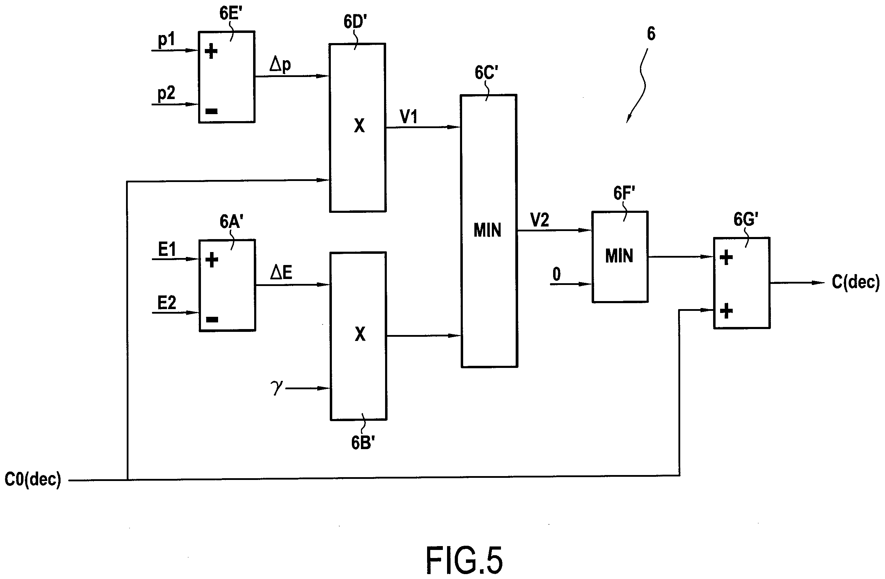

Au contraire, s'il détermine que la différence ∆E(t) est négative (réponse non au test de l'étape E60), le dispositif d'ajustement 6 ajuste la butée de décélération C0(dec) à partir de la différence ∆E(t) comme décrit ultérieurement en référence à la figure 5 (étape E80).

Les valeurs ajustées à l'instant t, notée C(acc) ou C(dec), prennent en compte avantageusement le manque de précision du dispositif de dosage 2 à l'instant t.

Les étapes E10 à E80 sont alors réitérées pour l'instant d'échantillonnage suivant (n+1)Te (étape E90), etc.

Les valeurs seuil ainsi ajustées C(acc) et C(dec) peuvent être avantageusement utilisées dans une boucle ouverte de régulation du turboréacteur 1, mise en oeuvre au cours d'une phase transitoire de l'avion (ex. accélération ou décélération), et au cours de laquelle on compare l'estimation E1(t) de débit carburant fournie par le dispositif de dosage 2 aux valeurs C(acc) et C(dec) afin de déterminer la marge d'accélération ou de décélération disponible pour le turboréacteur. On améliore ainsi les performances du turboréacteur 1.

Nous allons maintenant décrire plus précisément, en référence à la **figure 4** comment est réalisé l'ajustement de la butée d'accélération C0(acc), dans une variante préférentielle de réalisation.

Comme décrit précédemment, le dispositif d'ajustement 6 évalue à chaque instant la différence ∆E(t) entre les estimations E1(t) et E2(t), à l'aide d'un module 6A.

On suppose ici que la différence ∆E(t) est considérée comme fiable à l'issue de l'étape de comparaison E50 décrite précédemment (sinon cette valeur est forcée à zéro pour éviter un ajustement erroné de la butée d'accélération C0(acc)).

Dans la variante décrite ici, la différence ∆E(t) est pondérée par un facteur multiplicatif noté y, appliqué par un module de pondération 6B. Le facteur de pondération y est un nombre positif inférieur ou égal à 1. Il permet de régler l'ajustement appliqué sur la valeur seuil C0(acc).

La différence pondérée y x ∆E(t) est ensuite comparée par un module 6C à une valeur V1. Le module 6C sélectionne la valeur minimum, notée V2, entre la différence pondérée y x ∆E(t) et la valeur V1.

La valeur V1 correspond à une différence de précisions attendue les estimations E1(t) et E2(t). Elle est calculée, par un module 6D, comme le produit de la butée d'accélération C0(acc) non ajustée à l'instant t, par la différence notée ∆p de précisions entre les estimations fournies par le doseur 2 et le dispositif d'hybridation 5B.

La différence de précisions ∆p est évaluée par un module 6E. Elle est prise égale ici à p1-p2, où :

- p1 désigne, comme mentionné précédemment, le taux d'imprécision exprimé en pourcentage, de l'estimation E1(t) fournie par le dispositif de dosage 2 (p1=100-δ1, où 51 désigne la précision de l'estimation E1(t)) : p1 est calculé, de façon connue de l'homme du métier, en fonction du régime du turboréacteur 1 et des spécifications fournies par le fabricant du dispositif de dosage 2 ; et

- p2 désigne ici, de façon similaire, le taux d'imprécision, exprimé en pourcentage, de l'estimation E2(t) fournie par le dispositif d'hybridation 5B (p2=100-δ2, où δ2 désigne la précision de l'estimation E2(t) exprimée en pourcentage). Ce taux d'imprécision p2 dépend ici de la valeur seuil de débit de carburant C0(acc) et des spécifications fournie par le fabricant du dispositif 5B.

Autrement dit, compte tenu de la définition de p1 et p2 considérée ici, pour les plages de valeur de débit de carburant dans lesquelles l'estimation E1(t) est plus précise que l'estimation E2(t), ∆p = p1-p2 est négative.

Inversement, pour les plages de valeur de débit de carburant dans lesquelles l'estimation E2(t) fournie par le dispositif d'hybridation 5B est plus précise que l'estimation E1(t) fournie par le doseur 2, ∆p = p1-p2 est positive.

En prenant la valeur minimum entre V1 et y x ∆E(t), on s'assure ainsi de ne jamais dépasser, lors de l'ajustement de la valeur seuil C0(acc), la différence existant entre les précisions du doseur 2 et du dispositif d'hybridation 5B : on garantit ici par ce biais la fiabilité de la valeur utilisée pour ajuster la valeur seuil C0(acc).

Bien entendu, un raisonnement équivalent peut être mené à partir de la différence de précisions ∆p= δ2-δ1.

La valeur V2 délivrée par le module 6C est ensuite comparée par un comparateur 6F par rapport à zéro : le module 6F sélectionne la valeur maximale entre V2 et zéro.

Puis un module 6G ajuste la valeur C0(acc) avec la valeur sélectionnée par le module 6F. Autrement dit, si la valeur V2 est supérieure ou égale à 0, elle est utilisée pour ajuster la valeur seuil C0(acc).

Plus précisément ici, un module 6G ajuste la valeur seuil C0(acc) en une valeur seuil C(acc), conformément à l'équation suivante :

$$C(acc) = C0(acc) + V2$$

Dans le mode de réalisation envisagé ici, si V2 est inférieure à 0, on ajuste la butée de décélération C0(dec), comme illustré à la **figure 5.**

Les modules 6A', 6B', 6C', 6D', 6E' et 6G' représentés sur la figure 5 sont identiques ou similaires aux modules 6A, 6B, 6C, 6D, 6E et 6G la figure 4, hormis le fait qu'ils opèrent sur la butée de décélération C0(dec) au lieu d'opérer sur la butée d'accélération C0(acc).

Par ailleurs, le comparateur 6F' compare la valeur V2 par rapport à 0, mais contrairement au comparateur 6F de la figure 4, il sélectionne la valeur minimale entre V2 et 0.

Puis le module 6G' ajuste la valeur seuil C0(dec) avec la valeur sélectionnée par le module 6F'. Autrement dit, si la valeur V2 est inférieure à 0, elle est utilisée pour ajuster la valeur seuil C0(dec) en une valeur seuil C(dec), conformément à l'équation suivante :

$$C(dec) = C0(dec) + V2$$

Ainsi, dans le mode de réalisation décrit ici, on ajuste tantôt la butée d'accélération, si ΔE(t) est positive, tantôt la butée de décélération si ΔE(t) est négative.

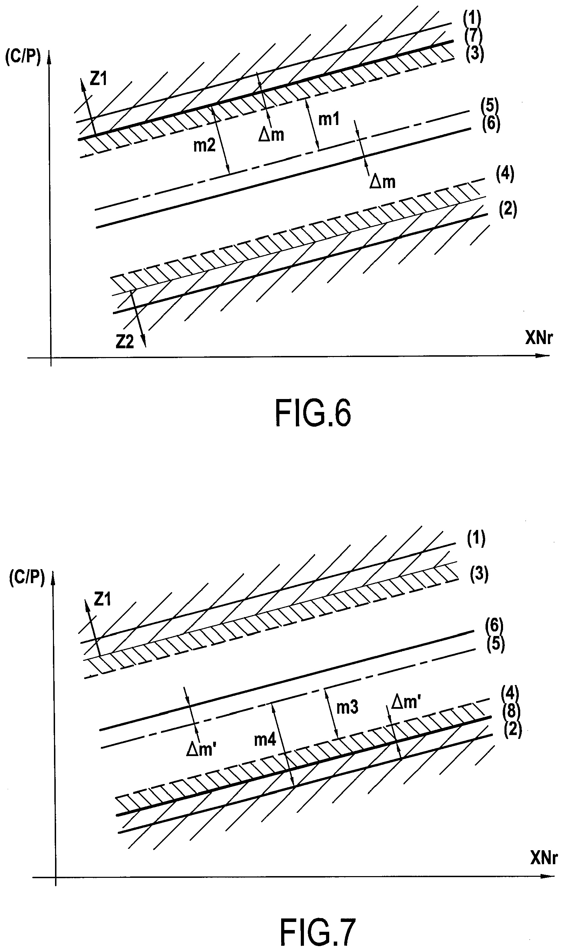

Les figures 6 et 7 illustrent respectivement des exemples d'ajustements des valeurs seuils C0(acc) et C0(dec) réalisés conformément à l'invention.

La **figure 6** représente les variations du ratio (C/P) entre le débit de carburant injecté dans la chambre de combustion du turboréacteur et la pression en sortie de la chambre de combustion, en fonction du régime réduit XNr du turboréacteur 1.

Sur cette figure :

- la courbe (1) représente la ligne de pompage du turboréacteur, et Z1 la zone dans laquelle un risque de pompage existe ;
- la courbe (2) représente la ligne d'extinction du turboréacteur, et Z2 la zone dans laquelle un risque d'extinction du turboréacteur existe ;
- les courbes (3) et (4) représentent respectivement le ratio des butées d'accélération C0(acc) et de décélération C0(dec) non ajustées sur la pression P en sortie de la chambre de combustion, c'est-à-dire les butées telles qu'évaluées par le secteur d'opérabilité du turboréacteur 1 en fonction de ses caractéristiques.

La courbe (5) représente le ratio (C/P) évalué à partir de l'estimation E1(t) de débit carburant fournie par le dispositif de dosage 2 du turboréacteur 1.

La marge d'accélération « virtuelle » du turboréacteur disponible en phase d'accélération de l'avion compte tenu de l'estimation (5) est alors illustrée par m1 : elle correspond à l'écart existant entre la courbe (3) représentant le ratio de la butée d'accélération C0(acc) sur la pression P, et la courbe (5).

On suppose maintenant que l'estimation E1(t) du débit de carburant fournie par le dispositif de dosage 2 est surestimée, et qu'une estimation plus précise du débit de carburant injecté dans la chambre de combustion, par exemple l'estimation E2(t) fournie par le dispositif d'hybridation 5B, conduirait à l'obtention de la courbe (6). Autrement dit, la marge d'accélération « réelle » dont dispose le turboréacteur en phase d'accélération de l'avion est m1+Δm, Δm étant positif (cette marge d'accélération réelle correspond à l'écart entre la courbe (6) et la courbe (3)).

Conformément à l'invention, on ajuste la butée d'accélération C0(acc) pour prendre en compte le delta de précision entre les estimations E1(t) et E2(t). La courbe (7) représente le ratio de la butée d'accélération ajustée C(acc) conformément à l'invention, sur la pression P en sortie de la chambre de combustion.

La nouvelle marge d'accélération disponible pour le turboréacteur 1 en prenant en compte la butée d'accélération ajustée C(acc) conformément à l'invention est maintenant m2=m1+Δm. Elle a donc été augmentée, et compense la surestimation du débit de carburant par le dispositif de dosage 2.

De façon similaire, la **figure 7** représente les variations du ratio (C/P) entre le débit de carburant injecté dans la chambre de combustion du turboréacteur et la pression P en sortie de la chambre de combustion, en fonction du régime réduit XNr du turboréacteur.

Sur cette figure :

- la courbe (1) représente la ligne de pompage du turboréacteur, et Z1 la zone dans laquelle un risque de pompage existe ;
- la courbe (2) représente la ligne d'extinction du turboréacteur, et Z2 la zone dans laquelle un risque d'extinction du turboréacteur existe ;
- les courbes (3) et (4) représentent respectivement le ratio des butées d'accélération C0(acc) et de décélération C0(dec) non ajustées sur la pression P en sortie de la chambre de combustion, c'est-à-dire les butées telles qu'évaluées par le secteur d'opérabilité du turboréacteur 1 en fonction de ses caractéristiques.

La courbe (5) représente le ratio (C/P) évalué à partir de l'estimation E1(t) de débit carburant fournie par le dispositif de dosage 2 du turboréacteur 1.

La marge de décélération « virtuelle » du turboréacteur disponible en phase de décélération de l'avion, compte tenu de l'estimation (5), est alors illustrée par m3 : elle correspond à l'écart entre la courbe (4) représentant le ratio de la butée d'accélération C0(dec) sur la pression, et la courbe (5).

On suppose maintenant que l'estimation E1(t) du débit de carburant fournie par le dispositif de dosage 2 est sous-estimée, et qu'une estimation plus précise du débit de carburant injecté dans la chambre de combustion, par exemple l'estimation E2(t) fournie par le dispositif d'hybridation 5B, conduirait à l'obtention de la courbe (6). Autrement dit, la marge de décélération « réelle » dont dispose le turboréacteur en phase de décélération de l'avion est m3+Δm', Δm' étant positif (cette marge de décélération réelle correspond à l'écart entre la courbe (6) et la courbe (4)).

Conformément à l'invention, on ajuste la butée de décélération C0(dec) pour prendre en compte le delta de précision entre les estimations E1(t) et E2(t). La courbe (8) représente le ratio de la butée de décélération ajustée C(dec) conformément à l'invention, sur la pression en sortie de la chambre de combustion. La nouvelle marge de décélération disponible pour le turboréacteur en prenant en compte la butée décélération ajustée conformément à l'invention est maintenant m4=m3+Δm'. Elle a donc été augmentée, et compense la sous-estimation du débit de carburant par le dispositif de dosage 2.

L'invention conduit donc à une amélioration des marges d'accélération et de décélération.

On note que dans le mode de réalisation décrit ici, on ajuste tantôt la marge d'accélération si le débit de carburant injecté dans la chambre de combustion a été surestimé par le doseur 2, tantôt la marge de décélération si le débit de carburant injecté dans la chambre de combustion a été sous-estimé par le doseur 2. Cette stratégie d'ajustement permet d'améliorer les performances du turboréacteur 1.

Toutefois, d'autres stratégies d'ajustement peuvent être envisagées, en fonction des objectifs que l'on souhaite atteindre.

Ainsi, dans un autre mode de réalisation, on ajuste la marge d'accélération si le débit de carburant injecté dans la chambre de combustion a été sous-estimé par le doseur 2 (ΔE(t) négative), et la marge de décélération si le débit de carburant injecté dans la chambre de combustion a été surestimé par le doseur 2 (ΔE(t) positive).

Dans un autre mode de réalisation encore, on ajuste, par exemple à chaque instant d'échantillonnage nTe les deux butées C0(acc) et C0(dec), à l'aide de la différence ΔE(t) indépendamment de son signe.

**Revendications**

1. Procédé d'ajustement d'une valeur seuil (C0(acc), C0(dec)) de débit carburant destinée à être utilisée dans une boucle ouverte de régulation d'une turbomachine (1) propulsant un aéronef, ledit procédé comportant :

    - une étape d'obtention (E20) d'une première estimation (E1) d'un débit de carburant injecté dans une chambre de combustion de la turbomachine (1), fournie par un dispositif de dosage (2) de carburant de la turbomachine ;
    - une étape d'obtention (E30) d'une seconde estimation (E2) du débit de carburant injecté dans la chambre de combustion, cette seconde estimation étant plus précise que la première estimation pour au moins un intervalle de valeurs du débit de carburant et fournie par un dispositif d'estimation (5) équipé d'un débitmètre (5A) ; et

    - une étape d'ajustement (E70,E80) de la valeur seuil (C0(acc),C0(dec)) de débit carburant à l'aide d'une différence (ΔE) évaluée entre la première estimation (E1) et la seconde estimation (E2).

2. Procédé d'ajustement selon la revendication 1, dans lequel l'étape d'ajustement (E70,E80) comprend l'ajout, à la valeur seuil de débit carburant (C0(acc), C0(dec)), de la différence évaluée entre la première estimation et la seconde estimation, pondérée par un facteur de pondération (γ) prédéterminé.

3. Procédé d'ajustement selon la revendication 2, comprenant en outre une étape de comparaison (E50) de la différence évaluée entre la première estimation et la seconde estimation pondérée par ledit facteur de pondération (γ) prédéterminé avec une différence de précisions attendue entre la première estimation et la seconde estimation.

4. Procédé d'ajustement selon l'une quelconque des revendications 1 à 3 comprenant en outre une étape de comparaison (E50) de la différence évaluée entre la première estimation et la seconde estimation avec un seuil défini à partir d'une précision attendue de la première estimation fournie par le dispositif de dosage.

5. Procédé d'ajustement selon l'une quelconque des revendications 1 à 4, dans lequel la valeur seuil de débit carburant (C0(acc)) est une valeur destinée à être utilisée lors d'une phase d'accélération de l'aéronef.

6. Procédé d'ajustement selon la revendication 5, dans lequel au cours de l'étape d'ajustement, la valeur seuil de débit carburant est ajustée si la différence évaluée entre la première estimation et la seconde estimation est positive, la valeur seuil restant inchangée sinon.

7. Procédé d'ajustement selon l'une quelconque des revendications 1 à 5, dans lequel la valeur seuil de débit carburant (C0(dec)) est une valeur destinée à être utilisée lors d'une phase de décélération de l'aéronef.

8. Procédé d'ajustement selon la revendication 7, dans lequel au cours de l'étape d'ajustement, la valeur seuil de débit carburant est ajustée si la différence évaluée entre la première estimation et la seconde estimation est négative, la valeur seuil restant inchangée sinon.

9. Utilisation d'une valeur seuil de débit carburant dans une boucle ouverte de régulation d'une turbomachine propulsant un aéronef lors d'une phase transitoire de l'aéronef, ladite valeur seuil étant ajustée à l'aide d'un procédé d'ajustement selon l'une quelconque des revendications 1 à 8.

10. Programme d'ordinateur comportant des instructions pour l'exécution des étapes du procédé d'ajustement selon l'une quelconque des revendications 1 à 8 lorsque ledit programme est exécuté par un ordinateur.

11. Dispositif d'ajustement (6) d'une valeur seuil (C0(acc),C0(dec)) de débit carburant destinée à être utilisée dans une boucle ouverte de régulation d'une turbomachine (1) propulsant un aéronef, ledit dispositif comportant :

- des moyens d'obtention d'une première estimation (E1(t)) d'un débit de carburant injecté dans une chambre de combustion de la turbomachine (1), fournie par un dispositif (2) de dosage de carburant de la turbomachine ;
- des moyens d'obtention d'une seconde estimation (E2(t)) du débit de carburant injecté dans la chambre de combustion, plus précise que la première estimation pour au moins un intervalle de valeurs du débit de carburant et fournie par un dispositif d'estimation (5) équipé d'un débitmètre ; et
- des moyens d'ajustement (6G) de la valeur seuil de débit carburant à l'aide d'une différence évaluée entre la première estimation et la seconde estimation.

12. Turbomachine (1) propulsant un aéronef et comportant :

- un dispositif (2) de dosage de carburant apte à fournir une estimation d'un débit de carburant injecté dans une chambre de combustion de la turbomachine ;
- un dispositif (5) d'estimation du débit de carburant injecté équipé d'un débitmètre, ledit dispositif d'estimation étant apte à fournir une estimation plus précise que le dispositif de dosage du débit de carburant injecté dans la chambre de combustion du turboréacteur pour au moins un intervalle de valeurs de débit carburant ; et
- un dispositif (6) d'ajustement d'une valeur seuil de débit carburant selon la revendication 11, apte à utiliser des estimations fournies par le dispositif de dosage et le dispositif d'estimation.

**Patentansprüche**

1. Verfahren zum Anpassen eines Schwellenwertes (C0(acc), C0(dec)) des Kraftstoffdurchsatzes zur Verwendung in einem offenen Regelkreis einer Turbomaschine (1), die ein Flugzeug antreibt, wobei das Verfahren umfasst:

- einen Schritt des Erhaltens (E20) einer ersten Schätzung (E1) eines in eine Brennkammer der Turbomaschine (1) eingespritzten Kraftstoffdurchsatzes, die von einer Dosiervorrichtung (2) des Kraftstoffes der Turbomaschine bereitgestellt wird,
- einen Schritt des Erhaltens (E30) einer zweiten Schätzung (E2) des in die Brennkammer eingespritzten Kraftstoffdurchsatzes, wobei die zweite Schätzung genauer als die erste Schätzung ist, zumindest für einen Bereich von Kraftstoffdurchsatzwerten, und von einer Schätzvorrichtung (5) bereitgestellt wird, die mit einem Durchsatzmessgerät (5A) ausgestattet ist, und
- einen Schritt des Anpassens (E70, E80) des Schwellenwertes (C0(acc), C0(dec)) des Kraftstoffdurchsatzes mit Hilfe einer Differenz ($\Delta E$), die zwischen der ersten Schätzung (E1) und der zweiten Schätzung (E2) ermittelt wurde.

2. Verfahren zum Anpassen gemäß Anspruch 1, wobei der Schritt des Anpassens (E70, E80) das Addieren der Differenz, die zwischen der ersten Schätzung und der zweiten Schätzung ermittelt wurde, zu dem Schwellenwert des Kraftstoffdurchsatzes (C0(acc), C0(dec)) umfasst, gewichtet mit einem vorbestimmten Gewichtungsfaktor ($\gamma$).

3. Verfahren zum Anpassen gemäß Anspruch 2, ferner umfassend einen Schritt des Vergleichens (E50) der Differenz, die zwischen der ersten Schätzung und der zweiten Schätzung ermittelt wurde, gewichtet mit dem vorbestimmten Gewichtungsfaktor ($\gamma$), mit einer Differenz der erwarteten Genauigkeit zwischen der ersten Schätzung und der zweiten Schätzung.

4. Verfahren zum Anpassen gemäß einem der Ansprüche 1 bis 3, das ferner einen Schritt des Vergleichens der Differenz, die zwischen der ersten Schätzung und der zweiten Schätzung ermittelt wurde, mit einem Schwellenwert, der ausgehend von einer erwarteten Genauigkeit der ersten Schätzung, die von der Dosiervorrichtung bereitgestellt wird, definiert wird.

5. Verfahren zum Anpassen gemäß einem der Ansprüche 1 bis 4, wobei der Schwellenwert des Kraftstoffdurchsatzes (C0(acc)) ein Wert zur Verwendung in einer Beschleunigungsphase des Flugzeugs ist.

6. Verfahren zum Anpassen gemäß Anspruch 5, wobei in dem Schritt des Anpassens der Schwellenwert des Kraftstoffdurchsatzes angepasst wird, wenn die Differenz zwischen der ersten Schätzung und der zweiten Schätzung positiv ist, und der Schwellenwert ansonsten unverändert bleibt.

7. Verfahren zum Anpassen nach einem der Ansprüche 1 bis 5, wobei der Schwellenwert des Kraftstoffdurchsatzes (C0(dec)) ein Wert zur Verwendung in einer Verzögerungsphase des Flugzeugs ist.

8. Verfahren zum Anpassen gemäß Anspruch 7, wobei in dem Schritt des Anpassens der Schwellenwert des Kraftstoffdurchsatzes angepasst wird, wenn die Differenz zwischen der ersten Schätzung und der zweiten Schätzung negativ ist, und der Schwellenwert ansonsten unverändert bleibt.

9. Verwendung eines Schwellenwertes des Kraftstoffdurchsatzes in einem offenen Regelkreis einer Turbomaschine, die ein Flugzeug antreibt, in einer vorübergehenden Phase des Flugzeugs, wobei der Schwellenwert unter Verwendung eines Verfahrens zum Anpassen gemäß einem der Ansprüche 1 bis 8 angepasst wird.

10. Computerprogramm mit Anweisungen zum Durchführen der Schritte des Verfahrens zum Anpassen gemäß einem der Ansprüche 1 bis 8, wenn das Programm von einem Computer ausgeführt wird.

11. Vorrichtung zum Anpassen (6) eines Schwellenwertes (C0(acc), C0(dec)) des Kraftstoffdurchsatzes zur Verwendung in einem offenen Regelkreis einer Turbomaschine (1), die ein Flugzeug antreibt, wobei die Vorrichtung umfasst:

- Mittel zum Erhalten einer ersten Schätzung (E1(t)) eines in eine Brennkammer der Turbomaschine (1) eingespritzten Kraftstoffdurchsatzes, die von einer Dosiervorrichtung (2) des Kraftstoffes der Turbomaschine bereitgestellt wird,
- Mittel zum Erhalten einer zweiten Schätzung (E2(t)) des in die Brennkammer eingespritzten Kraftstoffdurchsatzes, die genauer als die erste Schätzung ist, zumindest für einen Bereich von Kraftstoffdurchsatzwerten, und von einer Schätzvorrichtung (5) bereitgestellt wird, die mit einem Durchsatzmessgerät ausgestattet ist, und
- Mittel zum Anpassen (6G) des Schwellenwertes des Kraftstoffdurchsatzes mit Hilfe einer Differenz, die zwischen der ersten Schätzung und der zweiten Schätzung ermittelt wurde.

12. Turbomaschine (1), die ein Flugzeug antreibt und Folgendes umfasst:

- eine Vorrichtung (2) zum Dosieren von Kraftstoff, die geeignet ist, eine Schätzung eines in eine Brennkammer der Turbomaschine eingespritzten Kraftstoffdurchsatzes bereitzustellen,
- eine Vorrichtung (5) zum Schätzen des eingespritzten Kraftstoffdurchsatzes, die mit einem Durchsatzmessgerät ausgestattet ist, wobei die Vorrichtung zum Schätzen geeignet ist, eine genauere Schätzung bereitzustellen als die Vorrichtung zum Dosieren des in die Brennkammer des Turbojetmotors eingespritzten Kraftstoffdurchsatzes, zumindest für einen Bereich von Kraftstoffdurchsatzwerten, und
- eine Vorrichtung (6) zum Anpassen eines Schwellenwertes des Kraftstoffdurchsatzes gemäß Anspruch 11, die geeignet ist, Schätzungen zu verwenden, die von der Dosiervorrichtung und der Schätzvorrichtung bereitgestellt wurden.

## Claims

1. A method of adjusting a fuel flow rate threshold value (C0(acc), C0(dec)) for use in an open loop for regulating a turbine engine (1) propelling an aircraft, said method comprising:

- an obtaining step (E20) of obtaining a first estimate (E1) of a flow rate of fuel injected into a combustion chamber of the turbine engine (1) and as delivered by a fuel metering device (2) of the turbine engine;
- an obtaining step (E30) of obtaining a second estimate (E2) of flow rate of fuel injected into the combustion chamber, the second estimate being more accurate than the first estimate for at least one range of fuel flow rate values and being delivered by an estimator device (5) having a flow meter (5A); and
- an adjustment step (E70, E80) of adjusting the fuel flow rate threshold value (C0(acc), C0(dec)) with the help of a difference (ΔE) evaluated between the first estimate (E1) and the second estimate (E2).

2. An adjustment method according to claim 1, wherein the adjustment step (E70, E80) comprises adding to the fuel flow rate threshold value (C0(acc), C0(dec)) the difference evaluated between the first estimate and the second estimate, as weighted by a predetermined weighting factor (γ).

3. An adjustment method according to claim 2, further including a comparison step (E50) of comparing the difference evaluated between the first estimate and the second estimate as weighted by said predetermined weighting factor (γ) with an expected accuracy difference between the first estimate and the second estimate.

**4.** An adjustment method according to any one of claims 1 to 3, further including a comparison step (E50) of comparing the difference evaluated between the first estimate and the second estimate with a threshold defined on the basis of an expected accuracy for the first estimate delivered by the metering device.

**5.** An adjustment method according to any one of claims 1 to 4, wherein the fuel flow rate threshold value (C0(acc)) is a value for use during a stage of the aircraft accelerating.

**6.** An adjustment method according to claim 5, wherein, during the adjustment step, the fuel flow rate threshold value is adjusted if the difference evaluated between the first estimate and the second estimate is positive, the threshold value otherwise remaining unchanged.

**7.** An adjustment method according to any one of claims 1 to 5, wherein the fuel flow rate threshold value (C0(dec)) is a value for use during a stage in which the aircraft is decelerating.

**8.** An adjustment method according to claim 7, wherein, during the adjustment step, the fuel flow rate threshold value is adjusted if the difference evaluated between the first estimate and the second estimate is negative, the threshold value otherwise remaining unchanged.

**9.** The use of a fuel flow rate threshold value in an open loop for regulating a turbine engine propelling an aircraft during a transient stage of aircraft operation, said threshold value being adjusted with the help of an adjustment method according to any one of claims 1 to 8.

**10.** A computer program including instructions for executing steps of the adjustment method according to any one of claims 1 to 8 when said program is executed by a computer.

**11.** A device (6) for adjusting a fuel flow rate threshold value (C0(acc), C0(dec)) for use in an open loop for regulating a turbine engine (1) propelling an aircraft, said device comprising:

• obtaining means for obtaining a first estimate (E1(t)) of a flow rate of fuel injected into a combustion chamber of the turbine engine (1) and as delivered by a fuel metering device (2) of the turbine engine;
• obtaining means for obtaining a second estimate (E2(t)) of flow rate of fuel injected into the combustion chamber, the second estimate being more accurate than the first estimate for at least one range of fuel flow rate values and being delivered by an estimator device (5) having a flow meter; and
• adjusting means (6G) for adjusting the fuel flow rate threshold value with the help of a difference evaluated between the first estimate and the second estimate.

**12.** A turbine engine (1) for propelling an aircraft and comprising:

• a fuel metering device (2) suitable for delivering an estimate of a flow rate of fuel injected into a combustion chamber of the turbine engine;
• an estimator device (5) having a flow meter for estimating the injected fuel flow rate, said estimator device being suitable for delivering an estimate that is more accurate than the metering device for the rate at which fuel is being injected into the combustion chamber of the turbojet, for at least one range of values of fuel flow rate; and
• a device (6) for adjusting a fuel flow rate threshold value in accordance with claim 11 and suitable for using estimates delivered by the metering device and by the estimator device.

FIG.1

FIG.2

$t = nTE$ ⟶ E10

Obtention de l'estimation E1(t)
fournie par le doseur 2 — E20

Obtention de l'estimation E2(t) fournie
par le dispositif d'hybridation 5B — E30

n ⟵ n+1 — E90

Calcul de la différence entre
les estimations: $\Delta E(t) = E1(t) - E2(t)$ — E40

E50

non ⟵ $\Delta E(t)$fiable ?

oui

E60

oui ⟵ $\Delta E(t) \geq 0$ ? ⟶ non

Ajustement C0(acc)
avec $\Delta E(t)$ — E70

Ajustement C0(dec)
avec $\Delta E(t)$

E80

FIG.3

FIG.4

EP 2 864 615 B1

FIG.5

EP 2 864 615 B1

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2958976

- EP 1510795 A